# EUROPEAN PATENT SPECIFICATION

(11) **EP 1 727 711 B1**
(45) Date of publication and mention of the grant of the patent: **01.12.2010**
(21) Application number: 05724097.0
(22) Date of filing: 28.02.2005
(51) Int. Cl.: B60R 21/16

(54) **UNFOLDING ASSIST MECHANISM FOR SIDE CURTAIN AIRBAG**
ENTFALTUNGSHILFSMECHANISMUS FÜR SEITENAIRBAG
MECANISME D'AIDE AU DEPLOIEMENT POUR AIRBAG RIDEAU

(30) Priority: 26.03.2004 US 556907 P
(43) Date of publication of application: 06.12.2006
(73) Proprietor: KEY SAFETY SYSTEMS, INC., Sterling Heights, MI 48314 (US)
(72) Inventor: WIPASURAMONTON, Pondget, P., Rochester, MI 48307 (US); JU, Chang-Hwan, Rochester, MI 48307 (US); MONIACI, Kenneth, D., Royal Oak, MI 48073 (US); CHANDRA, Sherri, Farmington, MI 48335 (US); COON, Jeffery, S., Sterling Heights, MI 48312 (US); CHOI, Seung, Ho, Lake Orion, MI 48359 (US); KALANDEK, Bruce, A., Dearborn, MI 48124 (US)
(74) Representative: Gislon, Gabriele
(86) International application number: PCT/US2005/006487
(87) International publication number: WO 2005/102788

(56) References cited:
- US-A1- 2001 035 633
- US-A1- 2003 132 624
- US-A1- 2004 056 456
- US-B1- 6 394 487
- US-B1- 6 457 740

## Description

This invention relates to a side curtain airbag and a module for protecting a vehicle occupant during a crash.

Conventional side curtain airbag systems include a sensor, which detects a crash or rollover and activates an inflator. Once activated, the inflator rapidly provides gas that passes through a conduit to the side curtain airbag. The gas inflates the side curtain airbag. The airbag unfolds and extends downward from a stored position to a protective position between the vehicle occupant and the vehicle structure.

Conventional side curtain airbags are made of woven fabric and typically include an inner panel and outer panel made from two separate pieces of fabric secured together or from one piece of fabric configured to form an inflatable chamber. The inner and outer pieces may also be secured together to form inflatable regions, uninflatable regions or relatively uninflatable regions. The regions that do not fully inflate reduce the volume of the inflatable chamber and generally reduce the time required to deploy the side curtain airbag. The reduced inflatable volume of the airbag allows utilization of a smaller output inflator, smaller inflator packaging, and results in a generally lighter and less expensive airbag module. The uninflatable regions of the side curtain airbag are typically positioned in areas where the vehicle occupant does not make contact with the uninflated region during a crash or rollover. The uninflatable regions, however, may have difficulty unfolding because they are not forced downward by inflator gas like the inflatable chambers. With little or no gas pressure, an uninflated region may become caught on the interior vehicle trim, unfold unevenly, or unfold slower, and must be dragged by laterally located inflating regions to unfold.

US 6 457 740 B1 discloses a side curtain airbag that includes an inner and outer panel of fabric sewn together generally about the periphery to form the airbag. Parallel sew lines within the area of the airbag form inflator channels. The side curtain airbag further includes a non-inflatable region extending laterally between inflatable regions. An inflatable pillar segment extends partially into the middle of the non-inflatable region to ensure proper inflation of the two inflatable regions and to protect the vehicle occupant from contact with the B-pillar located between the front and rear windows. The inflatable pillar segment does not assist the non-inflatable region in unfolding.

US 2001/035633 discloses a curtain bag for protecting a head of a vehicle occupant which inflates downward along a window using a gas introduced therein.

The curtain bag includes a gas-introducing chamber along an upper side of the bag and a plurality of small chambers, at least one of the said small chambers is bent in a direction of flow of the gas that allows the bag inflation.

This configuration reduces the loss of the speed of the flow of the gas and allows the bag to expand quickly.

The small chamber which is bent in the direction of flow of the gas is formed, for example, into a J-shape, C-shape, S-shape or into a spiral form.

Thus, the speed of expansion of the small chambers is substantially the same for each chamber.

US 2004/056456 discloses a side airbag including a vent hole to restrain an occupant of a vehicle in case of side collision or rollover.

The vent hole is provided in an inflatable part of the airbag to carry out the excess gas discharge function and in an embodiment the inflatable part of the airbag communicates to a secondary chamber via the vent hole, so that the excess gas is not released to the outside.

A demand remains for side curtain airbag designs allowing more uniform deployment of side curtain airbags.

A side curtain airbag having a region that assists a more slowly unfolding region of the airbag to unfold during airbag deployment is disclosed herein in Claim 1.

The various features and advantages of this invention will become apparent to those skilled in the art from the following detailed description of the invention.
Figure 1 shows a side curtain airbag in an inflated and deployed condition.
Figure 2 shows another side curtain airbag in an inflated and deployed condition.
Figure 3 shows another side curtain airbag including an N-shaped configuration.
Figure 4 shows another embodiment of the invention.
Figure 5 shows a further embodiment of the invention.

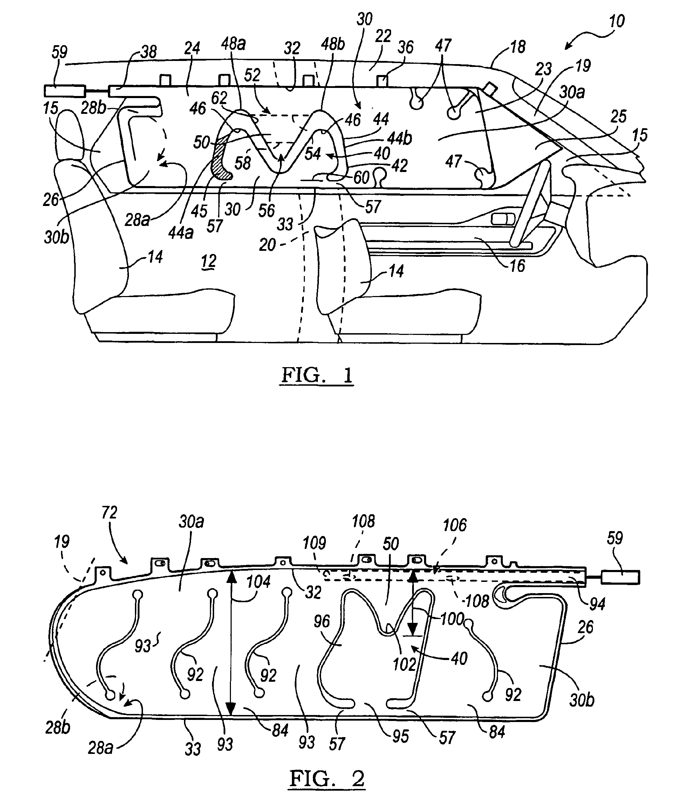

Figure 1 shows a vehicle 10 having an interior compartment 12 with front and rear seats 14 for vehicle occupants. The vehicle 10 includes side windows 15, two or more doors 16 each having a doorframe 18 and a vehicle A, B and C (or D) pillars 19, 20, 21 respectively. A side curtain airbag 24 is typically stored along the roof rail 22 of the vehicle located just above the door opening(s). The folded side curtain airbag is covered by one or more interior trim pieces, which are dislodged as the side curtain airbag inflates. The side curtain airbag 24 is depicted in an inflated and deployed condition it assumes to protect vehicle occupants in a crash. The side curtain airbag can optionally be stored within the doorframe 18.

The side curtain airbag 24 includes an inner panel 28a and outer panel 28b. In one example, the inner panel 28a and outer panel 28b are made of fabric and secured together at a perimeter 26 by a sewn seam, interweaving, or other means of securing. The inner panel 28a and outer panel 28b form an inflatable chamber including inflatable regions 30. also referred to as a fore and aft inflatable regions 30a, 30b. An upper end or top region 32 of the side curtain airbag 24 includes means for attachment 36 for securing the side curtain airbag 24 to the doorframe 18 or roof rail 22 and a gas inlet 38, which allows inflation gas to enter the side curtain airbag 24 from an inflator 59. The front of the side curtain airbag, that is to say the forward inflatable region 30a, can be connected directly to the A pillar or loosely configured. As illustrated the front 23 of the forward inflatable region 30a is tethered and connected to the A pillar 19 via a piece of fabric 25 sewn to the airbag. As illustrated this fabric is triangular in shape but can take many forms. The fabric, as shown, is not inflatable but can be configured as an inflatable chamber, such as an extension of chamber 30a. In some known installations, the tether is achieved using a piece of seat belt webbing. The rear 26 of the side curtain airbag 24, when deployed, can be loosely positioned relative to the C (or D) pillar 21 as illustrated or tethered thereto.

The side curtain airbag further includes a first region 40 located between the fore and aft inflatable regions 30a, 30b and spaced from the upper end or top region 32. Situated above the first region 40 is another inflatable region 50 in fluid communication with the inflatable regions 30a, 30b. The inflatable second region 50 can be considered as an extension of one or both of inflatable regions 30a, 30b. The first region 40 is configured to inflate at a slower rate than an inflatable second region 50. Region 40 is generally located next to a middle pillar such as the vehicle B pillar 20 of a modest sized vehicle or next to the B or C pillars of a longer vehicle. In one example, the first region 40 is completely surrounded by inflatable regions of the side curtain airbag 24, including inflatable fore and aft regions 30, the inflatable second region 50 and the narrow passages 57 mentioned below.

The first region 40 is formed in the side curtain airbag by a strongly concavely shaped regional boundary 44. It is to be understood that in a different embodiment not according to the invention disclosed herein a regional boundary may enclose within its periphery a non-inflatable region of the side curtain airbag. In the embodiment of Figure 1 this regional boundary 44 is M-shaped or triangular in shape. In one embodiment the regional boundary 44 is achieved by a seam 42, connecting the inner and outer panels, which follows the outer contour of the regional boundary 44 of the side curtain airbag. In another example, the regional boundary 44 is achieved by interweaving the yarns 45 used to form the woven panels 28a, 28b of the side curtain airbag 24. The sewn seam 42 or interwoven threads 45 allow little or no gas to pass through the regional boundary 44 and forces gas exiting the gas inlet 38 to flow in a tortuous path around, including the top, sides and bottom of the M-shaped regional boundary 44. The side curtain airbag further includes a plurality of other joined-together regions 47 formed by sewn seams or interweaving, the purpose of which is to reduce the inflatable volume of the airbag. The lower extremes of the regional boundary 44 are spaced from the bottom 33 of the side curtain airbag to form narrow passages or orifices 57 that impede the flow of inflation gas into the first region 40 at least during the initial period of airbag inflation.

The regional boundary 44 includes two upwardly pointing apexes 48a, 48b and a single downwardly pointing apex 56. As used herein and in the claims such terms as "upwardly" and "downwardly", "above" and "below" and other terms defining relative positions of features of the side airbag are understood to refer a deployed side curtain airbag. The upwardly pointing apexes 48a, 48b are defined by the points on the regional boundary 44 that are in closest proximity to the upper end or top region 32 of the side curtain airbag. The inflatable second region 50, in concert with the delayed inflation of the first region 40, provides a means for increasing the deployment rate of that region of the airbag below the regional boundary 44, that is for example, the first region 40.

The space between the upwardly pointing apexes 48a, 48b of the regional boundary 44 defines an upper base region 52 of the inflatable second region 50 having a first width 54. The base region leads to a trough region 56 having a narrowing width 58 that tapers toward a downwardly pointing apex 56. The M or triangular shape also provides the added benefit of relatively smaller inflatable airbag volume compared to other possible shapes such as square or circular.

Utilizing a sharply concave shape is especially advantageous for assisting in unfolding that part of the side curtain airbag below the second region 50, i.e. the first region 40 compared to the prior art. Before a crash, the side curtain airbag 24 is stored in an uninflated condition above the vehicle door. In a crash, the side curtain airbag 24 inflates with gas from the inflator 59, filling these inflatable regions 30, 50 above the regional boundary 44, pushing the side curtain airbag downward to its deployed state. The fore and aft regions 30a, 30b of the side curtain airbag deploy downwardly relatively quickly; however, inflation gas flow from chambers 30a, 30b to the first region 40 is impeded by the narrow passages or orifices 57. During a typical side airbag deployment, inflation gas is quickly conduct to the upper portions of inflatable regions 30a, 30b, 50. Typically, when using relatively narrow passages 57, even after a few milliseconds from initiation of the inflator to full inflation and deployment of the side curtain airbag, first region 40 does not fill much. First region 40 acts as an accumulator region to receive inflation gas that can be pushed through passages 57 into first region 40 upon further pressurization of the bag as it is compressed by a region of the vehicle occupant to be protected. The inflation gas within the medial second region 50, in concert with the M-shaped regional boundary 44, acts as a pneumatic wedge forcing the medial region of the side curtain airbag downwardly against the less inflated or uninflated region 40. The legs 44a, 44b of the regional boundary 44 can extend to the bottom 33 of the side curtain airbag; in this case the narrow passages or orifices 57 are eliminated and the first region 40 does not received any inflation gas this embodiment is not claimed.

Figure 2 shows another embodiment of a side curtain airbag 72 having some features similar to that of the side curtain airbag 24 of Figure 1, that is fore and aft inflatable regions 30a, 30b, a regional boundary 44, a first region 40 and a second region 50.

The side curtain airbag 72 further includes a plurality of other joined-together regions or regional boundaries 92 formed by sewn seams or interweaving the yarns forming the opposing panels of the airbag. The regional boundaries 92 are arcuate in shape and generally extend in a top-to-bottom direction. A purpose of these regions or regional boundaries 92 is to reduce the inflatable volume of the airbag. These regions are located in the fore and aft inflatable regions of the side curtain airbag 72 and subdivide the inflatable regions 30 into smaller inflatable regions 93.

The operation of this side curtain airbag is much the same as that of the side curtain airbag 24 of Figure 1. The accumulator first region 40 under the M-shaped regional boundary 44 is accessible by inflation gas through narrow passages or orifices 57 and the opening 95 receives inflation gas from the inflated region 30 during a crash. Initially, as the side curtain airbag 72 inflates, the first region 40 is uninflated. The inflation gas generally takes the path of least resistance in filling and inflating the side curtain airbag 72. Thus, the inflation gas must flow around the regional boundary 44. In a crash, during the relatively few milliseconds it takes to fill regions 30, the first region 40 remains uninflated or relatively uninflated compared to the inflated regions 30. When a vehicle occupant contacts the side curtain airbag in any of the inflated regions 30 during a crash, some of the gas occupying the region 30 is pushed through the passages 57 into opening 95 and into the relatively uninflated accumulator fisrt region 40, thereby reducing the inflation pressure level in the inflated regions 30 and lessening the rebound force generated by the inflated regions 30.

The lowest point 56; 102 of the inflatable second region 50 is spaced from the top of the side curtain airbag by a distance 100. Preferably, this distance 100 is a range of at least 40% to 70% or even 100 % of a height 104 of the side curtain airbag 72 to ensure adequate assistance to the second region 50 in unfolding the first region 40 of the side curtain airbag. At a distance of 100% the lowest point is generally at the bottom 33 of the airbag. Distances 100 less than 30% of the height 104 of the side curtain airbag can be utilized; however, the increase in the rate of deployment of the second region 50 may be less compared to placing the lowest point 56; 102 lower.

The means by which inflation gas is conduct from the inflator to the inflatable regions 30, 50 will vary with application. In Figure 1, inflation gas exiting the inlet 38 begins to inflate the closest inflatable region first; the other inflatable regions fill rapidly in quick succession. Figure 2 illustrates an alternate gas distribution technique in which a gas distribution tube or hose 106 is located within the side curtain airbag generally above the inflatable second region 50 along a region of the top of the bag. In practice, the tube can be a hollow bent or straight metal tube and the hose can be configured as flexible reinforced rubber and/or fabric hose. The gas distribution tube or hose 106 includes one or more vents 108 allowing inflation gas to flow through and directly into the inflatable second region 50, as well as into fore and aft regions 30a, 30b. The end 109 of the tube or hose 106 can be open or closed depending upon the amount of flow needed to inflate the forward inflatable region. By directing inflation gas into the inflatable second region 50, the vents 108 provide another means of increasing the deployment rate of the side curtain airbag and in particular second region 50.

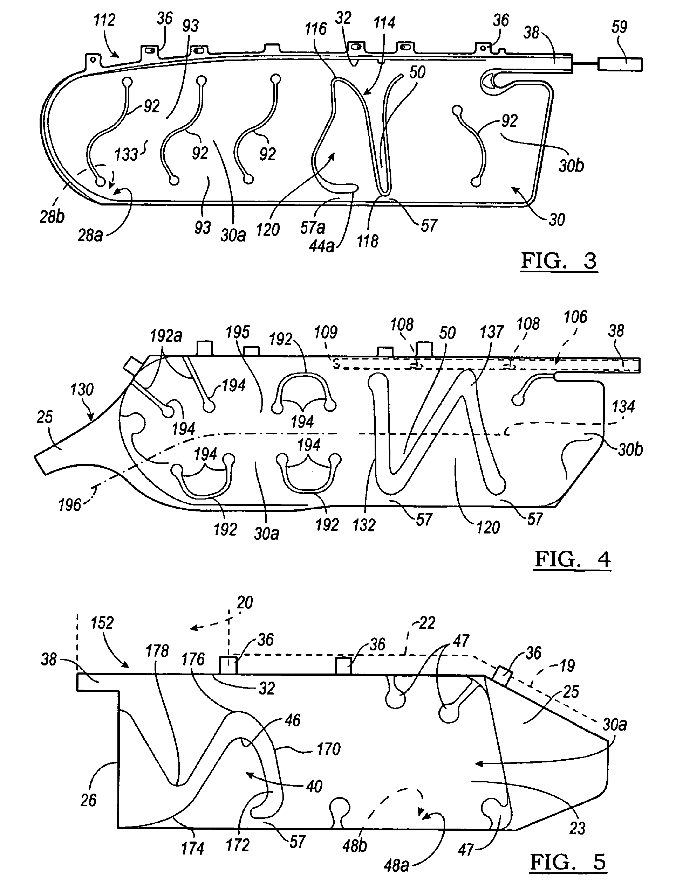

Figure 3 shows another embodiment of a side curtain airbag 112 having features similar to that of the side curtain airbags 24, 72 of Figures 1 and 2, that is, a fore and aft inflatable region 30a, 30 respectively, a second or medial region 50, attachment regions 36, regional boundaries 92 for the fore and aft regions, and an arcuate shaped regional boundary 114 defining the lower extremes of second region 50. The regional boundary 114 in this embodiment is N-shaped, and as before, can be formed by sewing or by interweaving the inner and outer panels 28a, 28b together. In the illustrated embodiment the regional boundary 114 is asymmetric in shape having a single upwardly pointing apex 116 and a single downwardly pointing apex at its lowest point 118.

In a preferred version of this embodiment the low point 118 of the regional boundary is spaced from the lower side or bottom 33 of the side curtain airbag, as is the low point of leg 44a of the region 114. By way of illustration, the lowest point is spaced a distance 57 from the bottom while leg 44a is spaced a distance 57a. These distances can be the same or different depending on the desired gas flow characteristics into and out of the region 120. As with first region 40 of the embodiment of Figure 1, the first region 120 is also relatively uninflatable, that is, the first region 120 inflates at a slower rate than the inflatable second region 50, or is uninflatable, although the latter embodiment is not claimed.

The N-shaped regional boundary 114 is also advantageous when the inflatable second region 50 is located upstream of the first region 116 relative to the gas inlet 38 and the inflator 59 and is easily configurable to provide a narrow dimensioned region 120. As gas fills the side curtain airbag 112, the airbag is unfolded by the force of the gas. The inflatable second region 50 is inflated and begins unfolding essentially before inflation gas reaches the extreme arcuate region 116. As the second region 50 unfolds, it forcibly pushes on the non-linear regional boundary 114, thereby assisting the first region 120 to unfold.

Figure 4 shows another embodiment of the invention. A side curtain airbag 130 includes an N-shaped regional boundary 132 that positions region 120 closer to the inlet than region 50. This N-shaped regional boundary 132 is generally symmetrically configured about a horizontal axis 134 that is shown as a phantom line. The side curtain airbag 130 includes a distribution tube or hose 106 with vents 108 and an end 109 and functions to directly conduct inflation gas from the inlet 38 to the inflatable regions 30a, 30b, 50. The side curtain airbag 130 further includes a plurality of regional boundaries 192, 192a similar in function to regional boundaries 92, formed by sewn seams or interweaving the yarns forming the opposing panels of the airbag. By way of illustration, three of the regional boundaries 192 are arcuately shaped and do not extend to the extremes of the side curtain airbag. Two of the regional boundaries 192a are linear in shape and extend from the edge of the side curtain airbag. Each of the regional boundaries 192, 192a has a commonly shaped end portion 194 positioned apart from an axis 196 of the region 30a. The enlarged lobes of each end portion 194 of a regional boundary act as a stress reducer lowering stresses forming in the airbag fabric during inflation and impact by a vehicle occupant. Each of the regional boundaries 192, 192a reduces the inflatable volume of forward region 30a and the spacing of the respective terminal ends 194 permits a center region 195 of forward region 30a about axis 196 to inflate to its maximum permitted width without any constrictions in this region, which corresponds to the region where a head of the vehicle occupant to be protected is most probable to come in contact with the side curtain airbag.

Figure 5 shows an embodiment of a side curtain airbag 152 not covered by claims. The side curtain airbag 152 is configured to protect a single vehicle occupant, such as the driver or front seat passenger of a vehicle. This side curtain airbag is substantially similar to the side curtain airbag 24 of Figure 1 in construction but is significantly shorter in horizontal length as it will extend only from about the A pillar to about the B pillar 20 (shown in phantom line) of the vehicle and when deployed will also extend down from the vehicle's roof rail as did the side curtain airbag 24 of Figure 1. The above described side curtain airbags 24, 112, etc., are sufficiently long to extend between the A pillar to the C or D pillar of the vehicle. This side curtain airbag 152 includes one major inflatable forward region 30a secured to the A pillar via a fabric panel 25. The side curtain airbag 152 is located proximate the vehicle's side window to protect the driver or front passenger as the case may be. As illustrated, the rear 26 of the side curtain airbag is loosely configured relative to the B pillar. The rear 26 of the side curtain airbag can also be connected to the B pillar via a fabric strap or other type of tether. The side curtain airbag 152, also includes a regional boundary 170, separating second region 50 from first region 40. The regional boundary 170 includes a leg 172, a terminal end thereof spaced from the bottom 33 of the side curtain airbag by a passage 57. The lower extreme 174 of the regional boundary, proximate the rear end 26 of the side curtain airbag 152, extends to or approximately to the bottom of the side curtain airbag. The upper extreme 176 of the regional boundary is sharply concave in shape and includes a low point 178 sufficiently close to the bottom of the side curtain airbag to encourage rapid inflation of this region of the side curtain airbag.

## Claims

1. A side curtain airbag (24, 72, 112, 130, 152) comprising:
an inflatable region (30) comprising fore and aft inflatable regions (30a, 30b);
a first region (40, 120) that is separated from said inflatable region (30) by a nonlinear regional boundary (44, 114, 132) and inflates at a lesser rate than said inflatable region (30); and
an inflatable second region (50) located between said first region (40, 120) and an upper end region (32) of the airbag to assist in unfolding said first region (40, 120) during deployment of the side curtain airbag **characterized in that** said first region (40, 120) receives inflation gas from the fore and aft inflatable regions (30a, 30b) when either of the fore and aft inflatable regions (30a, 30b) is contacted by a vehicle occupant.

2. A side curtain airbag (24, 72, 112, 130, 152) as recited in claim 1, wherein said inflatable second region (50) extends at least about 30% of the height of the side curtain airbag.

3. A side curtain airbag (24, 72, 112, 130, 152) as recited in claim 1 or 2, wherein said first region (40, 120) inflates at a slower rate than that of said inflatable second region (50).

4. A side curtain airbag (24, 72, 112, 130, 152) as recited in any of claims 1 - 3, wherein said non-linear regional boundary (44, 114, 132) has at least one downwardly pointing apex (56, 118).

5. A side curtain airbag (72) as recited in any of claims 1-4, wherein a gas distribution hose (106) in fluid communication with said side curtain airbag comprises a vent (108) located adjacent to said inflatable second region (50).

6. A side curtain airbag (24, 72, 112, 130, 152) as recited in any of claims 1 - 5, wherein said inflatable second region (50) is located upstream from said first region (40, 120) relative to a source of inflation gas.

7. A side curtain airbag (24, 72) as recited in any of claims 1-6, wherein said regional boundary (44) comprises an M-shape.

8. A side curtain airbag (112, 130, 152) as recited in any of claims 1-6, wherein said regional boundary (114,132) comprises an N-shape.

9. A side curtain airbag (24, 72, 112, 130, 152) as recited in any of claims 1-8, wherein said inflatable second region (50) has a triangular shape.

10. A side curtain airbag (24, 72, 112, 130, 152) as recited in any of claims 1-9, wherein said inflatable second region (50) is configured to push into an upper portion of said first region (40) to unfold said first region.

## Patentansprüche

1. Seitlicher Vorhangairbag (24, 72, 112, 130, 152), der Folgendes umfasst:
einen aufblasbaren Bereich (30), der einen vorderen und einen hinteren aufblasbaren Bereich (30a, 30b) umfasst,
einen ersten Bereich (40, 120), der von dem aufblasbaren Bereich (30) durch eine nicht lineare Bereichsgrenze (44, 114, 132) getrennt ist und sich mit einer geringeren Geschwindigkeit aufbläst als der aufblasbare Bereich (30), und
einen aufblasbaren zweiten Bereich (50), der zwischen dem ersten Bereich (40, 120) und einem oberen Endbereich (32) des Airbags angeordnet ist, um das Entfalten des ersten Bereichs (40, 120) während des Einsatzes des seitlichen Vorhangairbags zu unterstützen, **dadurch gekennzeichnet, dass** der erste Bereich (40, 120) das Aufblasgas von dem vorderen und dem hinteren aufblasbaren Bereich (30a, 30b) aufnimmt, wenn einer von dem vorderen und dem hinteren aufblasbaren Bereich (30a, 30b) durch einen Fahrzeuginsassen berührt wird.

2. Seitlicher Vorhangairbag (24, 72, 112, 130, 152) nach Anspruch 1, wobei sich der aufblasbare zweite Bereich (50) über wenigstens 30 % der Höhe des seitlichen Vorhangairbags erstreckt.

3. Seitlicher Vorhangairbag (24, 72, 112, 130, 152) nach Anspruch 1 oder 2, wobei sich der erste Bereich (40, 120) mit einer Geschwindigkeit aufbläst, die langsamer ist als diejenige des aufblasbaren zweiten Bereichs (50).

4. Seitlicher Vorhangairbag (24, 72, 112, 130, 152) nach einem der Ansprüche 1 bis 3, wobei die nicht lineare Bereichsgrenze (44, 114, 132) wenigstens einen nach unten zeigenden Scheitel (56, 118) hat.

5. Seitlicher Vorhangairbag (24, 72, 112, 130, 152) nach einem der Ansprüche 1 bis 4, wobei ein Gasverteilungsschlauch (106) in Fluidverbindung mit dem seitlichen Vorhangairbag eine Entlüftung (108) umfasst, die angrenzend an den aufblasbaren zweiten Bereich (50) angeordnet ist.

6. Seitlicher Vorhangairbag (24, 72, 112, 130, 152) nach einem der Ansprüche 1 bis 5, wobei der aufblasbare zweite Bereich (50) im Verhältnis zu einer Quelle von Aufblasgas stromaufwärts von dem ersten Bereich (40, 120) angeordnet ist.

7. Seitlicher Vorhangairbag (24, 72, 112, 130, 152) nach einem der Ansprüche 1 bis 6, wobei die Bereichsgrenze (44) eine M-Form umfasst.

8. Seitlicher Vorhangairbag (24, 72, 112, 130, 152) nach einem der Ansprüche 1 bis 7, wobei die Bereichsgrenze (114, 132) eine N-Form umfasst.

9. Seitlicher Vorhangairbag (24, 72, 112, 130, 152) nach einem der Ansprüche 1 bis 8, wobei der aufblasbare zweite Bereich (50) eine dreieckige Form hat.

10. Seitlicher Vorhangairbag (24, 72, 112, 130, 152) nach einem der Ansprüche 1 bis 9, wobei der aufblasbare zweite Bereich (50) so konfiguriert ist, dass er in einen oberen Abschnitt des ersten Bereichs (40) drückt, um den ersten Bereich zu entfalten.

## Revendications

1. Rideau gonflable latéral (24, 72, 112, 130, 152), comprenant:
une zone gonflable (30) comprenant des zones gonflables antérieure et postérieure (30a,30b);
une première zone (40, 120) qui est séparée de ladite zone gonflable (30) par une limite de zones non linéaire (44, 114, 132) et se gonfle à une moins grande vitesse que ladite zone gonflable (30); et
une seconde zone gonflable (50) située entre ladite première zone (40, 120) et une zone d'extrémité supérieure (32) du coussin gonflable pour aider au dépliage de ladite première zone (40, 120) pendant le déploiement dudit rideau gonflable latéral, **caractérisé par le fait que** ladite première zone (40, 120) reçoit le gaz de gonflage des zones gonflables antérieure et postérieure (30a, 30b) lorsqu'un passager de véhicule entre en contact avec l'une des zones gonflables antérieure et postérieure (30a, 30b).

2. Rideau gonflable latéral (24, 72, 112, 130, 152) selon la revendication 1, dans lequel ladite seconde zone gonflable (50) s'étend sur au moins à peu près 30% de la hauteur du rideau gonflable latéral.

3. Rideau gonflable latéral (24, 72, 112, 130, 152) selon la revendication 1 ou 2, dans lequel ladite première zone (40, 120) se gonfle à une moins grande vitesse que ladite seconde zone gonflable (50).

4. Rideau gonflable latéral (24, 72, 112, 130, 152) selon l'une quelconque des revendications 1-3, dans lequel ladite limite de zones non linéaire (44, 114, 132) a au moins un sommet (56, 118) pointant vers le bas.

5. Rideau gonflable latéral (24, 72, 112, 130, 152) selon l'une quelconque des revendications 1-4, dans lequel un tuyau de distribution de gaz (106) en communication fluide avec ledit rideau gonflable latéral comprend un orifice (108) situé près de ladite seconde zone gonflable (50).

6. Rideau gonflable latéral (24, 72, 112, 130, 152) selon l'une quelconque des revendications 1-5, dans lequel ladite seconde zone gonflable (50) est située en amont de ladite première zone (40, 120) par rapport à une source de gaz de gonflage.

7. Rideau gonflable latéral (24, 72) selon l'une quelconque des revendications 1-6, dans lequel ladite limite de zones (44) comprend une forme en M.

8. Rideau gonflable latéral (112, 130, 152) selon l'une quelconque des revendications 1-6, dans lequel ladite limite de zones (114, 132) comprend une forme en N.

9. Rideau gonflable latéral (24, 72, 112, 130, 152) selon l'une quelconque des revendications 1-8, dans lequel ladite seconde zone gonflable (50) a une forme triangulaire.

10. Rideau gonflable latéral (24, 72, 112, 130, 152) selon l'une quelconque des revendications 1-9, dans lequel ladite seconde zone gonflable (50) est configurée pour pénétrer en poussant dans une partie supérieure de ladite première zone (40) pour déplier ladite première zone.
